# EUROPEAN PATENT SPECIFICATION

(11) **EP 1 870 896 B1**
(45) Date of publication and mention of the grant of the patent: **17.08.2011**
(21) Application number: 07112186.7
(22) Date of filing: 13.10.2004
(51) Int. Cl.: G11B 27/034, G11B 27/10, G11B 27/32, H04N 9/804

(54) **Recording medium having a data structure for managing reproduction of data streams recorded thereon and recording and reproducing methods and apparatuses**
Aufzeichnungsmedium mit Datenstruktur zur Verwaltung der Wiedergabe von darauf aufgezeichneten Datenströmen sowie Verfahren und Vorrichtungen zur Aufzeichnung und Wiedergabe
Support d'enregistrement ayant une structure de données pour gérer la reproduction des flux de données enregistrées dessus et procédé et appareils d'enregistrement et de reproduction

(30) Priority: 13.01.2004 KR 20040002391
(43) Date of publication of application: 26.12.2007
(62) Divisional of application: 04793478.1
(73) Proprietor: LG Electronics Inc., Seoul 150-721 (KR)
(72) Inventor: Seo, Kang Soo, Dongan-gu, Anyang-si 104-1504, Gyeonggi-do (KR); Kim, Byung Jin, Bundang-gu, Seongnam-si 111-204, Gyeonggi-do (KR); Yoo, Jea Yong, 205-808, Seoul (KR)
(74) Representative: Vossius & Partner

(56) References cited:
- EP-A- 0 676 755
- EP-A- 0 737 980
- WO-A-2004/001748
- WO-A-2004/047100
- US-A- 5 881 203
- US-A1- 2002 191 963

## Description

### Technical Field

The present invention relates to high density recording media such as read-only blu-ray discs (BD-ROM) and methods and apparatuses associated therewith.

### Background Art

Optical discs are widely used as an optical recording medium. Presently, of the optical discs, a new high density optical recording medium (HD-DVD), such as the Blu-ray Disc (hereafter called as "BD"), is under development, for writing and storing high definition video and audio data.

Currently, global standard technical specifications of the Blu-ray Disc (BD), a next generation HD-DVD technology, are under development. BDs are viewed as a next generation optical recording solution that can store significantly larger amounts of data than present DVDs.

In relation to this, optical reproducing apparatuses for Blu-ray Disc (BD) standards are under development. However, because the Blu-ray Disc (BD) standards are not complete yet, there has been difficulty in developing a complete optical reproducing apparatus.

In a BD, main data such as AV data, and various kinds of associated supplemental data for convenience of a user, such as subtitle information are provided. Furthermore, the BD provides management information for reproducing the main data and the supplementary data from the optical disc.

However, in the present Blu-ray Disc (BD) standards, because consolidated standards of the supplementary data, particularly the subtitle information are not complete yet, there are many restrictions on the development of a Blu-ray Disc (BD) optical reproducing apparatus, which causes problems in reproducing supplemental data such as subtitle data and providing it to the user.

US-A-5,881,203 describes a data recording method in which video data and plural channels of language data are divided into packets as units, and video data and plural channels of language data are recorded on a record medium along with the control information containing a flag designating a reproducing channel of the language data matched to a reproducing pattern of the video data.

EP-A-0 676 755 describes a recording medium reproduction apparatus and recording medium reproduction method for selecting, mixing and outputting arbitrary two streams from medium including a plurality of high efficiency-encoded sound streams recorded thereon.

US-A-2002/0191963 describes a recording medium comprising a management area formed in part of an area, and a data area formed in another area, wherein data is divided into a plurality of program chains and recorded in the data area in a hierarchical structure in which each of the program chains is constructed by a plurality of programs.

### Disclosure of Invention

A recording medium according to the present invention as defined according to claim 1 includes a data structure for managing reproduction of data streams recorded thereon.

In one embodiment, the recording medium stores a playlist that includes a streams table, a playitem and a sub-playitem. The playitem includes information for managing reproduction of a main data stream of data packets, and the sub-playitem includes information for managing reproduction of at least one supplemental data stream of data packets. The streams table provides a list of packet identifiers in the data packets of the main and supplemental data streams.

In one embodiment, the streams table may also provide stream attributes for each main and supplemental data stream for which the streams table lists a packet identifier.

In a further embodiment, the recording medium stores a streams table defining a list of a main data stream and at least one supplemental data stream for selection by a reproducing apparatus during presentation of a playitem and sub-playitem. The playitem provides information for reproducing the main data stream and the sub-playitem provides information for reproducing the supplemental data stream.

In one embodiment the streams table, for each main and supplemental data stream, provides a packet identifier of the packets forming the data stream.

In a yet another embodiment, the streams table, for each main and supplemental data stream, provides stream attributes.

According to an aspect of the invention the playlist further includes another sub-playitem including information for managing another supplemental data stream, the another supplemental data stream not being divided into data packets; and the streams table providing an identifier of the another supplemental data stream.
According to a further aspect the main data stream is at least a video data stream and the supplemental data stream is a subtitle data stream.
According to a further aspect a management area stores a playlist and a data area stores the main and supplemental data streams.
According to a further aspect the playitem provides reproduction start and end times for reproducing the main data stream.
According to a further aspect the sub-playitem provides reproduction start and end time for reproducing the supplemental data stream.
According to a further aspect the sub-playitem provides reproduction start and end time for reproducing the supplemental data stream.
According to an aspect of the invention the streams table lists the main data stream and the supplemental data stream by providing packet identifiers for data packets forming the main data stream and forming the supplemental data stream.
According to a further aspect the management area stores the streams table in a playlist.
According to a further aspect the playlist includes the playitem and the sub-playitem.

The present invention further provides apparatuses and methods for recording and reproducing the data structure according to the present invention, as defined according to claims 11, 16, 19 and 21.
According to an aspect of the invention a method of reproducing a data structure for managing reproduction of data streams from a recording medium, comprises:
reproducing a streams table from a playlist recorded on the recording medium, the playlist including the streams table, a playitem and a sub-playitem, the playitem including information for managing reproduction of a main data stream of data packets, the sub-playitem including information for managing reproduction of at least one supplemental data stream of data packets, and the stream table providing a list of packet identifiers in the data packets of the main and supplemental data streams.
According to another aspect of the invention a method of recording a data structure for managing reproduction of data streams on a recording medium, comprises:
recording a playlist on the recording medium, the playlist including a streams table, a playitem and a sub-playitem, the playitem including information for managing reproduction of a main data stream of data packets, the sub-playitem including information for managing reproduction of at least one supplemental data stream of data packets, and the streams table providing a list of packet identifiers in the data packets of the main and supplemental data streams.
According to an aspect of the present invention an apparatus for reproducing a data structure for managing reproduction of data streams from a recording medium, comprises:
a driver for driving an optical reproducing device to reproduce data recorded on the recording medium;
a controller for controlling the driver to reproduce a streams table from a playlist recorded on the recording medium, the playlist including the streams table, a playitem and a sub-playitem, the playitem including information for managing reproduction of a main data stream of data packets, the sub-playitem including information for managing reproduction of at least one supplemental data stream of data packets, and the streams table providing a list of packet identifiers in the data packets of the main and supplemental data streams.
According to another aspect of the invention an apparatus for recording a data structure for managing reproduction of data streams on a recording medium, comprises:
a driver for driving an optical recording device to record data on the recording medium;
a controller for controlling the driver to record a playlist on the recording medium, the playlist including a streams table, a playitem and a sub-playitem, the playitem including information for managing reproduction of a main data stream of data packets, the sub-playitem including information for managing reproduction of at least one supplemental data stream of data packets, and the streams table providing a list of packet identifiers in the data packets of the main and supplemental data streams.

### Brief Description of the Drawings

The accompanying drawings, which are included to provide a further understanding of the invention and are incorporated in and constitute a part of this application, illustrate embodiment(s) of the invention and together with the description serve to explain the principle of the invention.

In the drawings;
FIG. 1 illustrates a file structure for managing data on a disc in accordance with an exemplary embodiment of the present invention;
FIG. 2 schematically illustrates a disc volume for storing the file structure of FIG. 1 in accordance with an embodiment of the present invention;
FIGS. 3A and 3B illustrate diagrams each showing an exemplary case when subtitle data (as an example of supplemental data) and main data are provided to a screen at the same time;
FIGS. 4A and 4B illustrate first embodiments of the data structure for managing reproduction of the data streams recorded on the recording medium;
FIGS. 5A and 5B illustrate second embodiments of the data structure for managing reproduction of the data streams recorded on the recording medium;
FIGS. 6A and 6B illustrate third embodiments of the data structure for managing reproduction of the data streams recorded on the recording medium;
FIG. 7A illustrates the Playable_PID_entries() data structure for a playitem and a sub-playitem according to an embodiment of the present invention in detail;
FIGS. 7B and 7C illustrate detailed structures of the Playable_PID_entries() and the Virtual_Playable_PID_entries() data structures according to embodiments of the present invention;
FIG. 7D illustrates a SubPlayItem syntax in a playlist file of the present invention; and
FIG. 8 is a detailed block diagram of an optical recording and reproducing apparatus according to the present invention

### Best mode for Carrying Out the Invention

Reference will now be made in detail to the exemplary embodiments of the present invention, examples of which are illustrated in the accompanying drawings, While terms used in the present invention are possibly selected from currently well-known terms, terms are arbitrarily chosen by the applicant in some cases and their meanings are explained in detail in the following description. Hence, the present invention should be understood with the meanings of the corresponding terms chosen by the applicant instead of the simple names of the terms.

In relation to the above, main data in the present invention means, for example, title information on an optical disc, and may include video and audio data an author provides to a user, in general recorded in MPEG2 format, and may also be called a main AV stream.

Supplementary or supplemental data means data related to the main data provided to a user for convenience of reproduction such as subtitle information, menu information, audio information for browsable slide show, etc. The supplemental information may be recorded in the MPEG2 format and multiplexed in a main AV stream, or recorded in the MPEG2 format or another format and stored as a stream file independent from the main AV stream.

In the present invention, the subtitle data means a kind of caption information, displayed on a screen when the user selects the subtitle for reproduction with the main data. Therefore, the subtitle can be written in various formats, such as MPEG2 transport (TS) packets, bit-map form of binary format, text data, etc., and the subtitle recorded as text data is called a text subtitle.

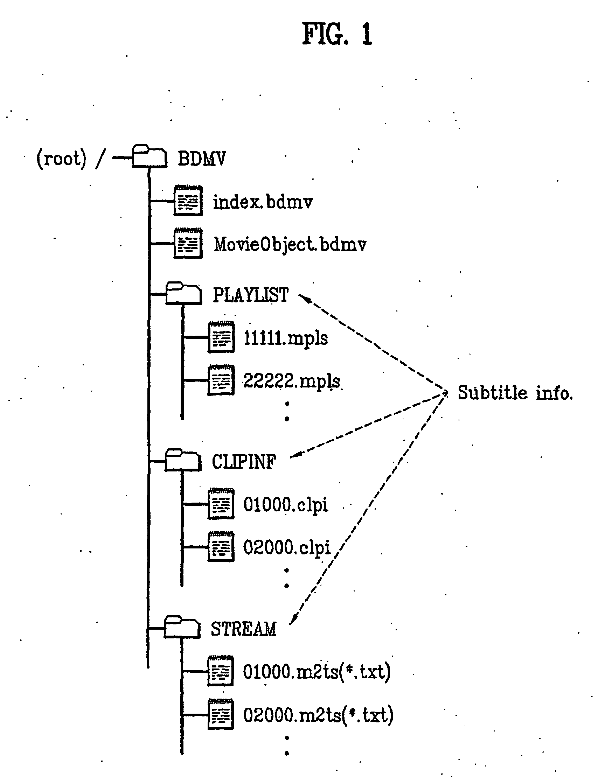

FIG. 1 illustrates a file structure for managing data on a disc in accordance with an exemplary embodiment of the present invention. As shown, at least one BD directory BDMV is included under a root directory. The BD directory includes an index file index.bdmv and an object file MovieObjectbdmv as general files (upper files) for securing a user's interactivity, and includes three directories: a playlist directory PLAYLIST, a clipinfo directory CLIPINF, and a stream directory STREAM.

The stream directory STREAM has files on a main video and audio stream (referred to as main AV stream) recorded in particular formats on the disc, and a stream related to a supplementary data, such as a subtitle (called as a subtitle stream). The main AV stream and the supplemental data streams are recorded in MPEG 2 transport packets, and an expansion name of such a file will generally be "*.m2ts". The A/V stream includes source packets of video and audio data. A source packet of video data includes a header and a transport packet. A source packet includes a source packet number, which is generally a sequentially assigned number that serves as an address for accessing the source packet According to the MPEG 2 standard, the transport packets include a packet identifier (PID). The PID identifies the sequence of transport packets to which a transport packet belongs. Each transport packet in the sequence will have the same PID.

Furthermore, the expansion name for the supplemental data may be different than "*.m2ts". For example, a subtitle stream will be, for example, "*.txt" if the subtitle stream is recorded in a text data format. If the subtitle stream is not recorded in the MPEG2 format, then a file expansion name proper to the format used may provided as the file expansion name. A stream file is sometimes called as a clip stream file in the BD standards, and in the present invention, the subtitle data will exist in a separate file form, e.g., as the subtitle stream file *.txt, separate from the AV stream.

The clipinfo directory CLIPINF has clipinfo files, for example 01000,clpi and 02000.clpi, that have one-to-one correspondence with the respective stream files *.m2ts, and *.txt Particularly, the clipinfo file *.clpi has attribute information and timing information of a relevant stream file. The timing information includes information on mapping a presentation time stamp (PTS) of data in the stream file to a source packet number of a source packet in the stream file. Typically this map is referred to as an entry point map.

In the BD standard, the AV stream *.m2ts, *.txt files, or etc. and the associated clipinfo file *.clpi are called a "clip", collectively. Accordingly, the file 01000.clpi in the clipinfo directory CLIPINF has attribute information and timing information on the file O1000.m2ts in the stream directory, and the files 01000.clpi and 01000.m2ts form a clip.

The playlist directory PLAYLIST has playlist files *.mpls, each having at least one playitem designating a playing interval of a particular clip. Therefore, the playitem has information on a play starting time In-Time and play end time Out-Time of a particular clip desired to play, i.e., designated by a clip name Clip_Information_File in the playitem. The playlist file *.mpls is basic play file information for playing a desired clip by providing at least one playitem. Moreover, the playlist file *.mpls is provided with a sub-playitem as necessary. The present invention suggests managing the supplementary data inclusive of the subtitle using the sub-playitem, of which detailed description will be given, later.

In the BD directory BDMV, there are an index file index.bdmv and an object file MovieObject.bdmv as general files for securing a user's interactivity. The index file index.bdmv has an index table index Table providing menu information and title information Title the user can select. The MovieObjsct.bdmv provides navigation commands for, for example, executing a playlist, and may be called from a selection made in the index table.

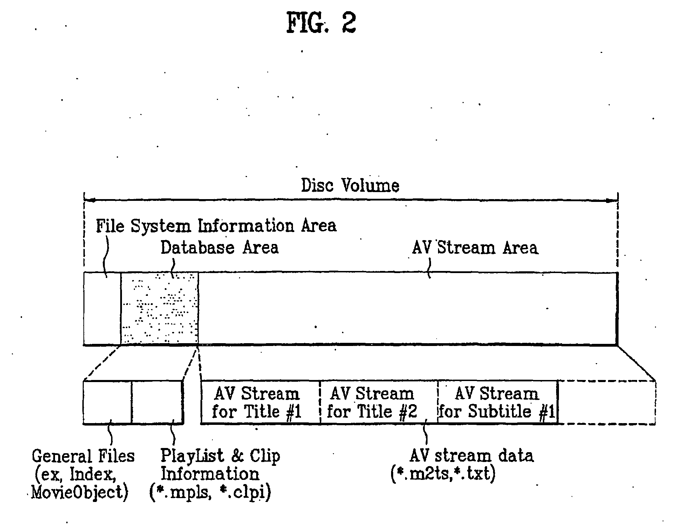

As shown in FIG. 2, the disc volume of a BD-ROM is organized into a file system information area, a database area, and an A/V stream area. The file system information area stores system information for managing the disc. The database area includes a general files area and a playlist and clip information area. The general files area stores general files such as the index.bdmv file and the MovieObject.bdmv file. The playlist and clip information area stores the PLAYLIST directory and the CLIPINF directory. The main data and the supplementary data, such as audio/video/graphic, recorded thereon are stored as the MPBG2 transport stream formatted clip files (*.m2.ts) in the A/V stream area. According to this, the reproducing apparatus determines the main data, and the supplementary data desired to reproduce, and a reproduction type, by using file information in the data base area Database Area.

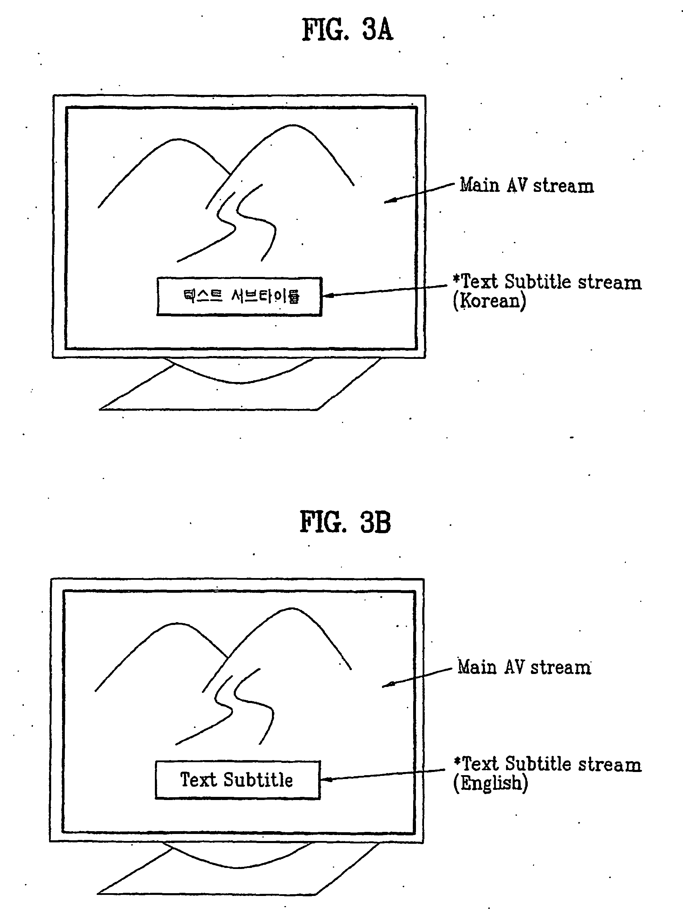

FIGS. 3A and 3B illustrate diagrams each showing an exemplary case when subtitle data (as an example of supplemental data) and main data are provided to a screen at the same time. FIG. 3A illustrates a diagram of a case where the text subtitle is in Korean, and FIG. 3B illustrates a diagram of a case where the text subtitle is in English.

In relation to above, the present invention suggests to provide a plurality of subtitles as a subtitle stream file independent from a main data (main AV stream file). In one case, the plurality of subtitles form independent subtitle stream files respectively, and in another case the plurality of subtitles are united into one subtitle stream file.

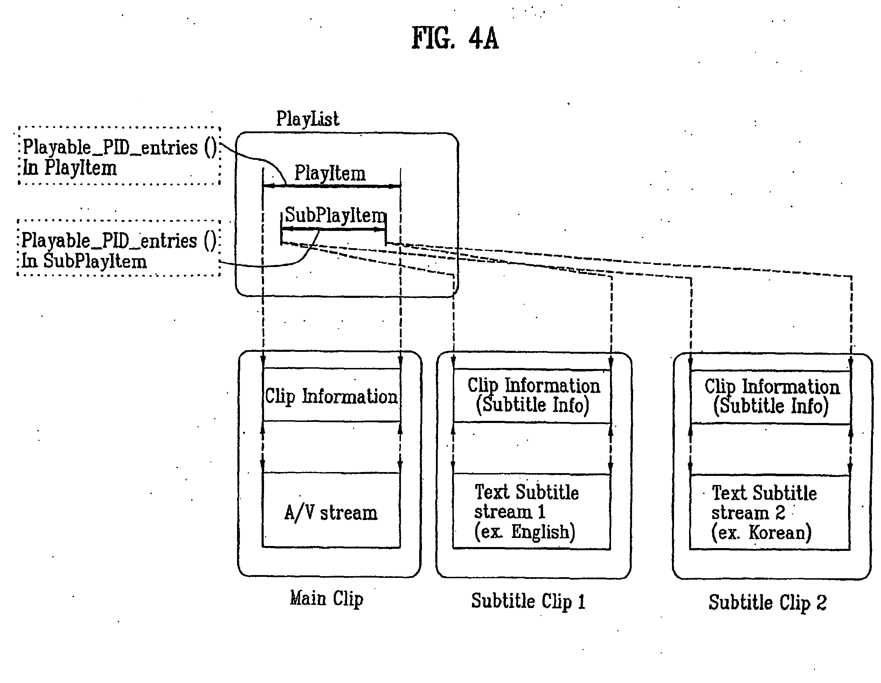

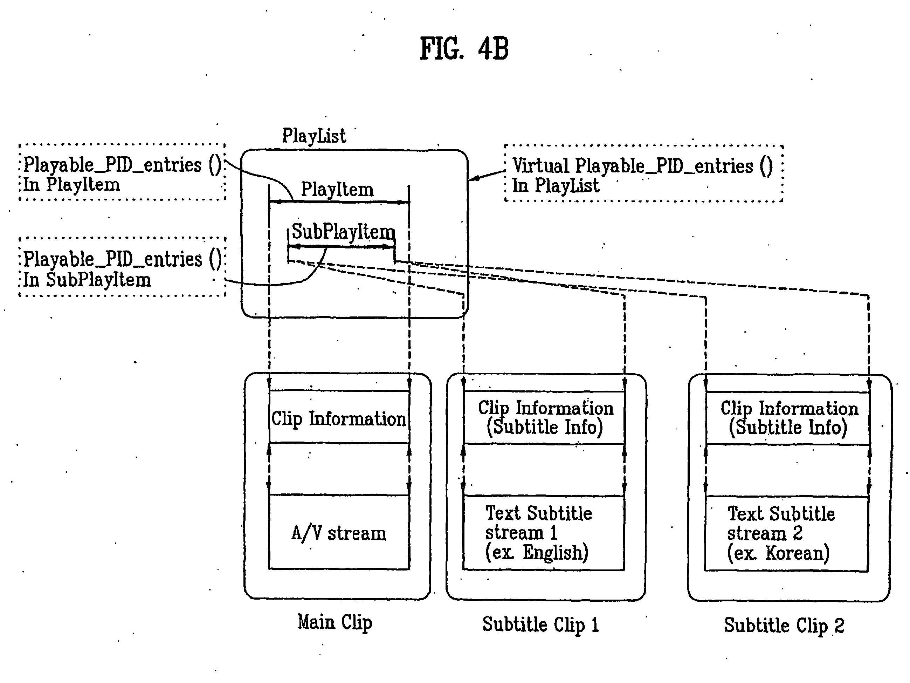

FIGS. 4A and 4B illustrate first embodiments of the data structure for managing reproduction of the data streams recorded on the recording medium. Here, the subtitle data. (as an example of supplemental data) linked with main data, includes a plurality of subtitles stored as independent subtitle stream files, and reproduction of the plurality of stream files are managed using one sub-playitem SubPlayItem.

For an example, FIGS. 4A and 4B illustrate a playitem PlayItem in the playlist PlayList includes reproduction managing information for reproducing the main data, and the sub-playitem SubPlayItem includes reproduction managing information for reproducing the subtitle data. More specifically, subtitle stream files Subtitle Clip 1 and 2 for two subtitles in the languages of Korean and English, respectively are reproduced linked with one sub-playitem SubPlayItem in the playlist PlayList

As further shown, there is a Playable_PID_entries() data structure for providing reproducible main data and subtitle information to the user as reproduction managing information in the playitem PlayItem for the main data, and in the sub-play item SubPlayItem for the subtitle data. FIG. 4B further illustrates that the playlist PlayList may include the data structure Virtual_Playable_PID_entries() for managing reproduction of both the main and subtitle data.

Particularly, in the case of FIG. 4B, all cases are possible, in which the Playable_PID_entries() is provided to the playitem PlayItem and the sub-playitem SubPlayItem and the Virtual_Playable_PID_entries() is provided to the common information area in the playlist. PlayList, or the Playable_PID_entries() is provided to the playitem PlayItem only for the main data, and the Virtual_Playable_PID_entries() including subtitle reproduction managing information in the common information area is provided in the playlist PlayList.

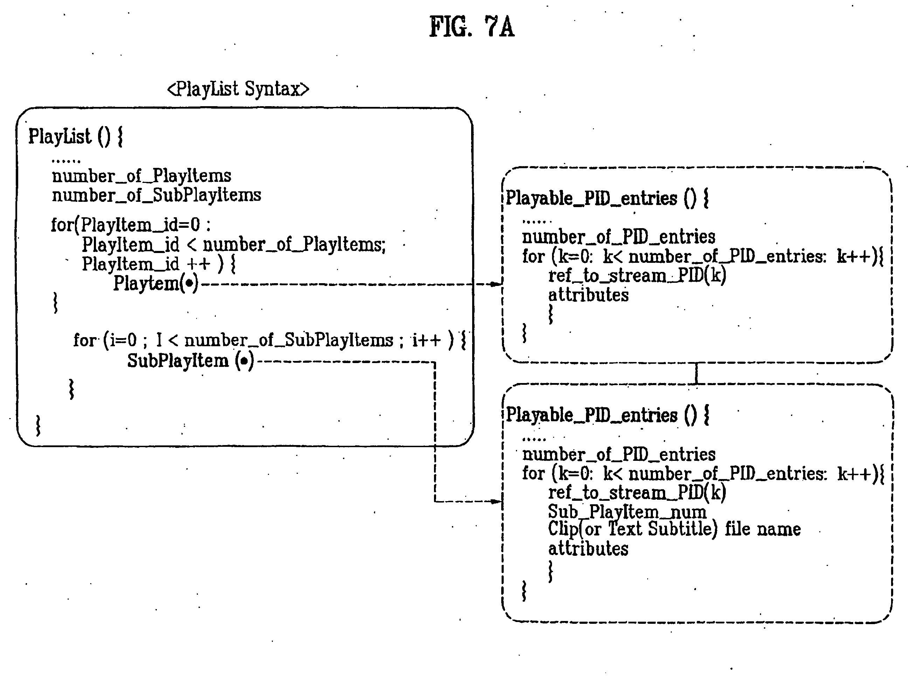

In relation to above, details of the data structures Playable_PID_entries() and the Virtual_Playable_PID_entries() will be described in detail below with respect to FIGS. 7A-7D.

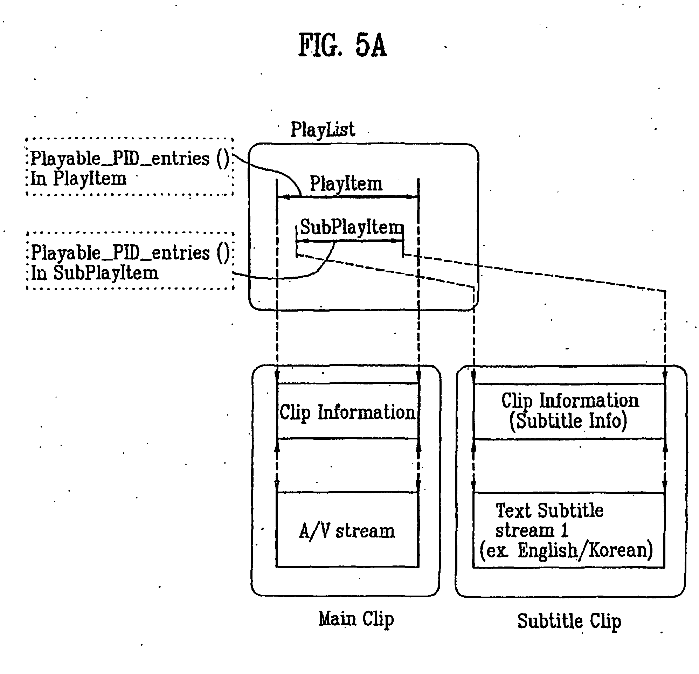

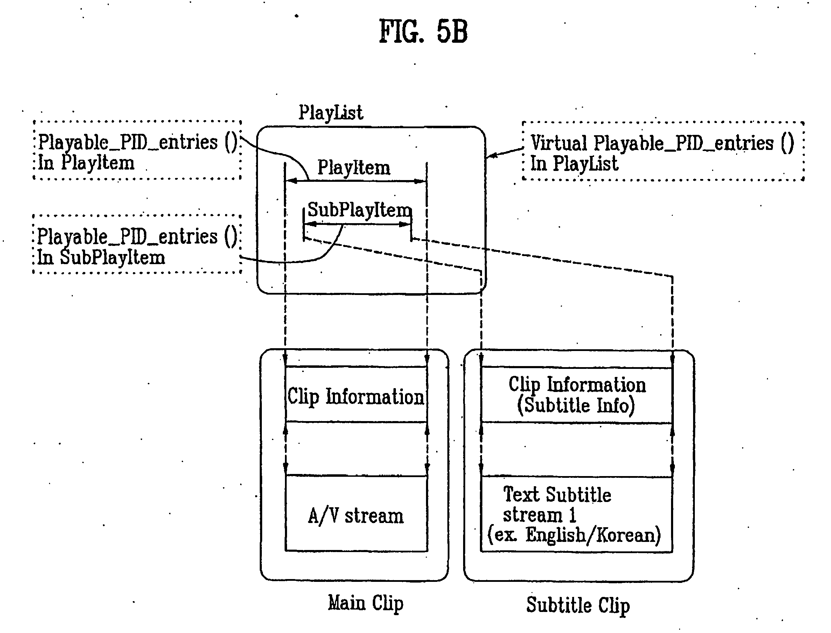

FIGS. 5A and 5B illustrate second embodiments of the data structure for managing reproduction of the data streams recorded on the recording medium. Here, the subtitle (as an example of supplemental data) linked with the main data and forming a plurality of subtitles is stored as one subtitle stream file, and reproduction of the subtitle stream file is managed using one sub-playitem SubPlayItem.

For example, in a case where two subtitles are united to form one subtitle stream file Subtitle Clip, and one subtitle file supports two language subtitles, the united subtitle stream file Subtitle Clip is reproduced linked with the sub-playitem SubPlayItem in the playlist PlayList. Reproduction managing information for managing this is recorded in the sub-playitem SubPlayItem, or playlist PlayList.

According to this, the playitem PlayItem in the playlist PlayList includes reproduction managing information for reproducing the main data, and the sub-playitem SubPlayItem includes reproduction managing information for reproducing the subtitle. Also, the Playable_PID_entries() data structure is provided in the playitem PlayItem in relation to the main data and in the sub-playitem SubPlayItem in relation to the subtitle as shown in FIG. 5A, and/or the Virtual_Playable_PID_entries() data structure, which assists in managing reproduction of the main data and the subtitle data, is provided in the playlist PlayList as shown in FIG. 5B.

Particularly, like FIG. 4B, in the case of FIG. 5B, all cases are possible, in which the Playable_PID_entries() is provided to the playitem PlayItem and the sub-playitem SubPlayItem and the Virtual_Playable_PID_enties() is provided to the common information area in the playlist PlayList, or the Playable_PID_entries() is provided to the playitem PlayItem only for the main data and the Virtual_Playable_PID_entries() including subtitle reproduction managing information is provided in the common information area of the playlist PlayList.

In relation to above, details of the data structures Playable_PID_entries() and the Virtual_Playable_PID_entries() will be described in detail below with respect to FIGS. 7A-7D.

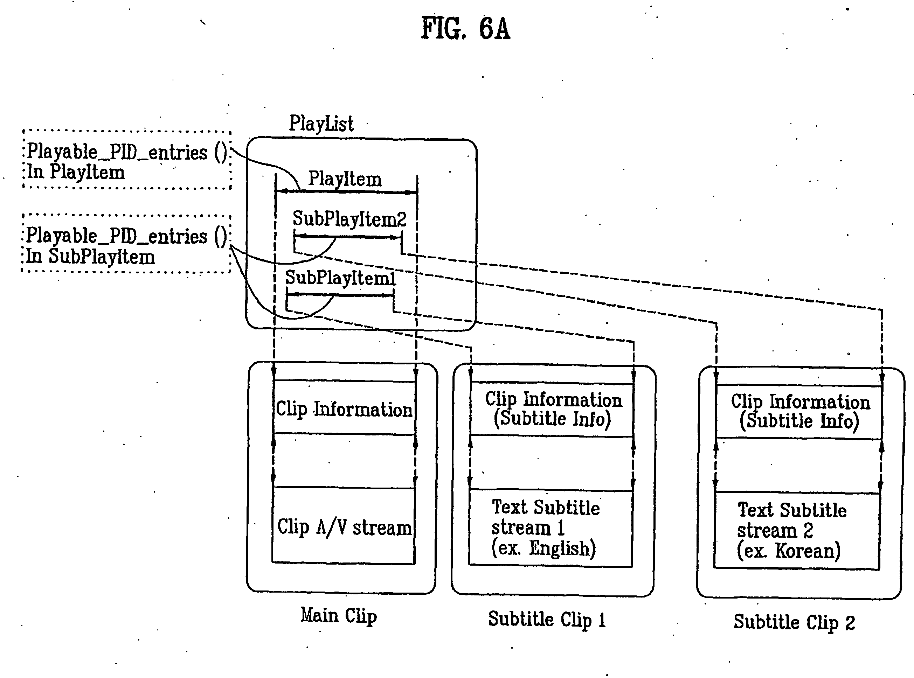

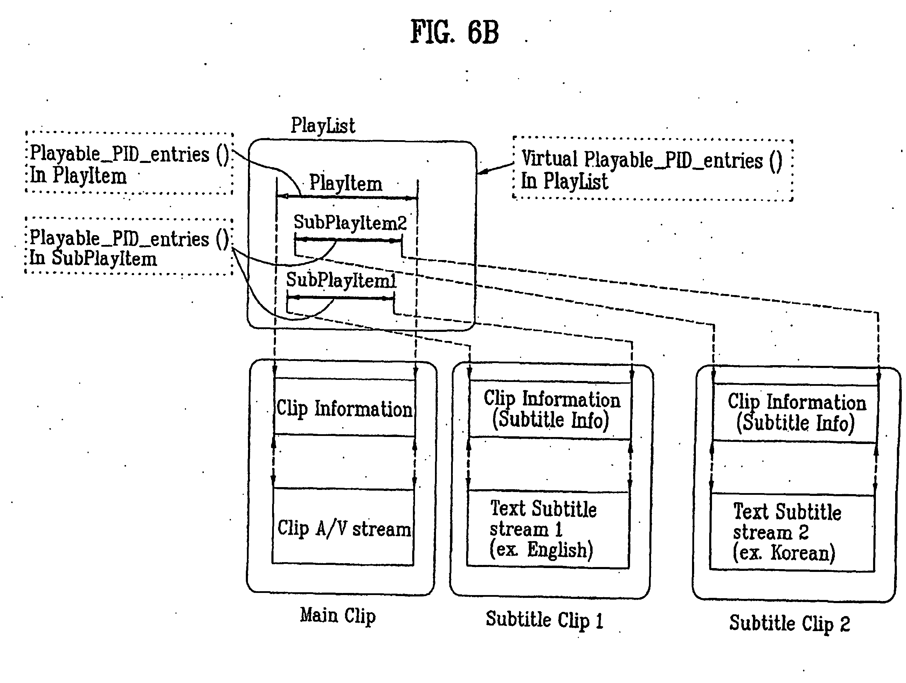

FIGS. 6A and 6B illustrate third embodiments of the data structure for managing reproduction of the data streams recorded on the recording medium. Here, the subtitle data (as an example of supplemental data) linked with a main data for a plurality of subtitles is stored as independent subtitle stream files respectively, and reproduction of the subtitle stream files is managed using corresponding sub-playitems.

For example, FIGS. 6A and 6B illustrate a playitem PlayItem in the playlist PlayList includes reproduction managing information for reproducing the main data, and the sub-playitems SubPlayItem 1 and SubPlayItem 2 include reproduction managing information for reproducing the subtitle stream files Subtitle Clip 1 and 2, respectively, for two subtitles in the languages of Korean and English, respectively.

As further shown, there is a Playable_PID_entries() data structure for providing reproducible main data and subtitle information to the user as reproduction managing information in the playitem Playitem for the main data, and in the sub-play items SubPlayItem1 and SubPlayltem 2 for the respective subtitle data. FIG. 6B further illustrates that the playlist . PlayList may include the data structure Virtual_Playable_PID_entries() for managing reproduction of both the main and subtitle data.

Particularly, in the case of FIG. 6B, all cases are possible, in which the Playa.ble_PID_entries() is provided to the playitem PlayItem and the sub-playitems SubPlayItem1 and SubPlayItem2 and the Virtual_Playable_PIDjentries() is provided to the common information area in the playlist PlayList, or the Playable_PID_entries() is provided to the playitem PlayItem only for the main data and the Virtual_Playable_PID_entries() including subtitle reproduction managing information in the common information area is provided in the playlist PlayList.

In relation to above, details of the data structures Playable_PID_entries() and the Virtual_Playable_PID_entries() will be described in detail below with respect to FIGS. 7A-7D.

Principal characteristics of the present invention notable in the first to third embodiments can be summarized as follows.

First, the definition that the main data and the subtitle (supplementary data) form separate individual files permits, not only a case when the supplementary data, such as the subtitle, can be recorded on the optical disc, but also to utilize an external file of the optical disc by means of download, and the like in the future.

Second, though the main data and the subtitle (supplementary data) related to each other are managed under the same file information, for an example, the playlist PlayList file, taking a variety of the subtitle (supplementary data) into account, the main data and the subtitle data are separated into a playitem PlayItem and sub-playitem SubPlayItem in recording the reproduction managing information. Therefore, even in a case where the supplementary data related to the main data exists in a variety of forms other than the subtitle, expansive application of this supplemental data becomes easy according to the present invention.

The introduction of the reproduction managing information independent from the main data, such as Playable_PID_entries() and Virtual_Playable_PID_entries(), into the management information for the subtitle (supplementary data) permits more effective reproduction management of the subtitle.

In relation to above, the Playable_PID_entries() and Virtual_Playable_PID_entries() data structures mentioned in the first to third embodiments as reproduction managing information will be described in detail below.

FIG. 7A illustrates the Playable _PID_entries() data structure for a playitem and a sub-playitem in detail. As shown, the Playable_PID_entries() data structure for both the playitem and the sub-playitem includes a number_of_PID_entries field indicating the number of PID entries in the data structure. For each of the number of PID entries, both data structures provide a ref_to_stream_PID(k) field and an attributes field. The ref_to_stream_PID(K) field provides the PID of the data packets for the data stream. For example, when in the playitem PlayItem, the PID of the main AV stream is provided. When in the sub-playitem Sub-PlayItem, the PID is the PID of a supplemental data stream.

Accordingly, since all the main AV streams managed by playitems are recorded on the MPEG2 TS format, the reproduction management can be made adequately with the ref_to_ stream_PID(K) field within the Playable_PID_entries() included in the playitem information PlayItem().

However, as described before, the supplemental data, such as certain types of subtitle data, may not be recorded in the MPEG2 TS format. As a result, there is no "PID" in the subtitle data, and reproduction of the subtitle with the ref_to_stream_PID(k) field is not possible. Accordingly, as shown in FIG. 7A, the Playabe_PID_entries() data structure for the sub-playitem Sub_PlayItem may include a sub-playitem number Sub_PlayItem_num or a relevant clip file name Clip_file_name, or Text_subtitle_file_name field, etc. to identify the appropriate clip file for reproduction of supplemental data.

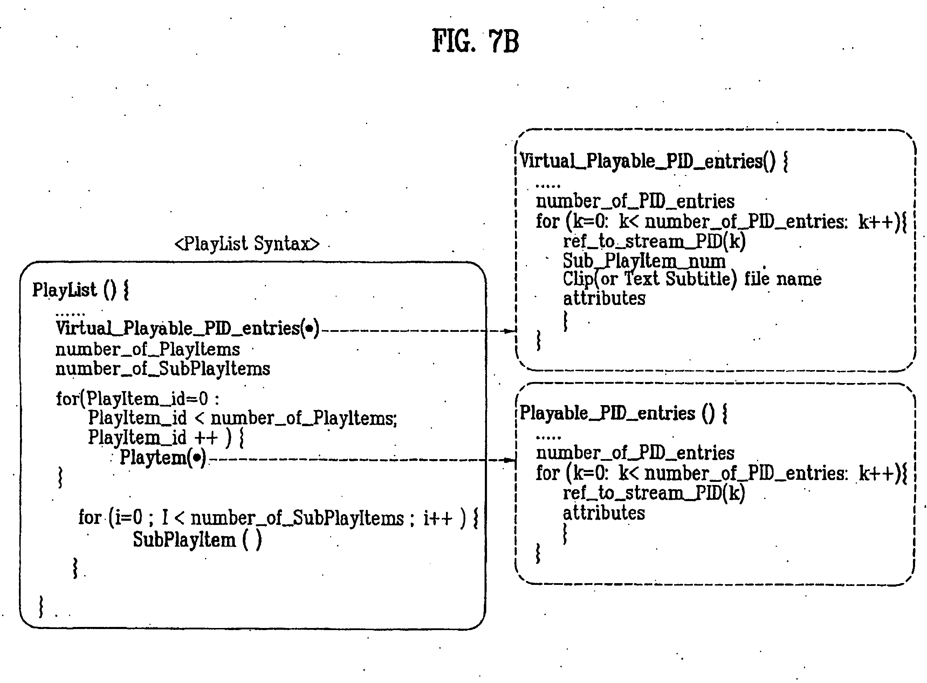

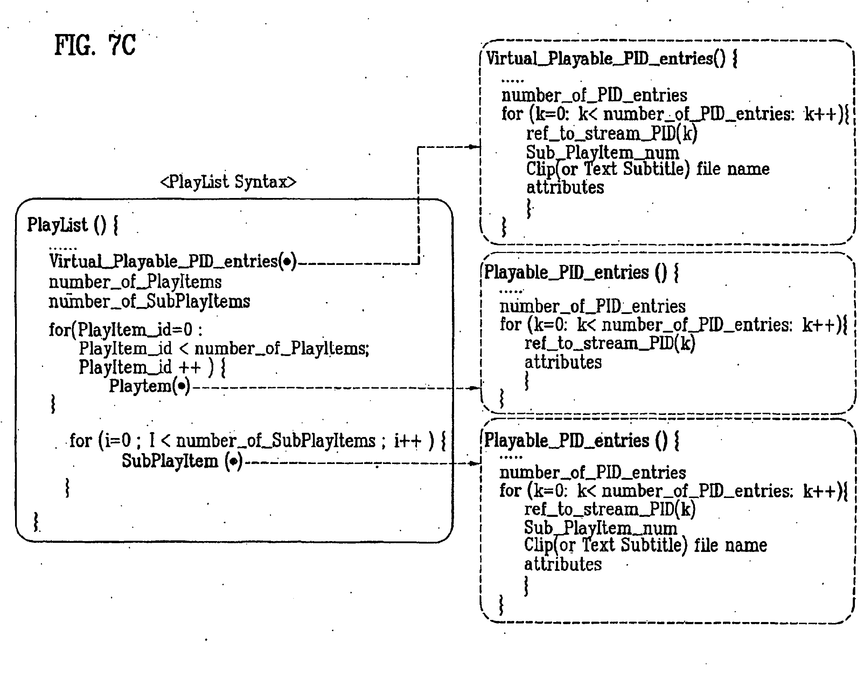

FIGS. 7B and 7C illustrate detailed structures of the Playable_PID_entries() and the Virtual_Playabls_PID_entries() data structures. FIG. 7B illustrates an embodiment where the Playable_PID_entries() data structure is provided for the playitem PlayItem of a playlist PlayList, but not for a sub-playitem SubPlayItem. Here, the Playable_PID_entries() data structure for the playitem PlayItem is the same as discussed above with respect to FIG. 7A. FIG. 7C illustrates an embodiment where the Playable_PID_entrie() data structure is provided for both the playitem PlayItem and the sub-playitem SubPlayltem. Here, the Playable_PID_entriesQ data structures for the playitem PlayItem and the sub-playitem SubPlayItem are the same as discussed above with respect to FIG. 7A.

FIGS. 7B and 7C also illustrates the Virtual_Playable_PD_entries() data structure. This data structure has the same fields as described above with respect to the Playable_PID_entries() data structures for the sub-playitem SubPlayItem. However, the Virtual_Playable_PID_entries() data structure provides the PIDs for the supplemental data streams and the main data stream. Namely, the Virtual_Playable_PID_entries() data structure provides the same information as the Playable_PID_entries() data structure for both the playitem PlayItem and the sub-playitem SubPlayItem. As such, the Virtual_Playable_PID_entries() data structure defines a list of the main data stream and each supplemental data stream for selection by a reproducing apparatus during presentation of the playitem PlayItem and the sub-playitem SubPlayItem.

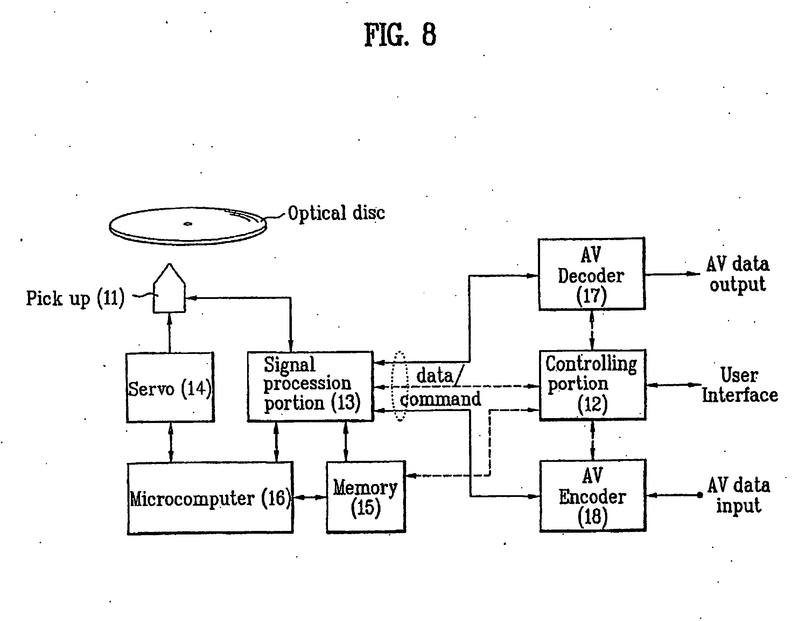

According to this, the optical recording reproduction apparatus (FIG. 8) can reproduce the data streams more efficiently because the playlist file may provide the reproduction managing information Virtual_Playable_PID_entries() for the main and supplemental data streams. Furthermore, if the Playable_PID_entries() data structures are provided in the playitem information PlayItem() or the sub-playitem information SubPlayItem(), reliability of this reproduction managing information will be enhanced.

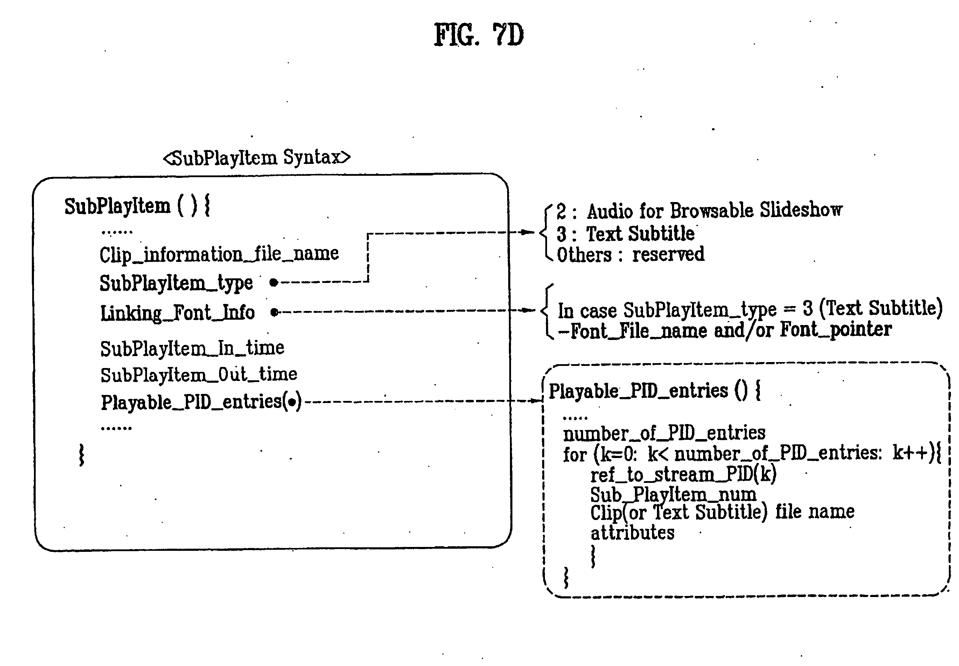

FIG. 7D illustrates a sub-playitem syntax in greater detail. As shown, the sub-playitem information SubPlayItem() has a field for designating the name of the clip information file Clip_information_file_name associated with the stream file to be reproduced, and provides a starting time SubPlayltem_In_time and an end time SubPlayltem_Out_time for reproducing the stream file indicated by the named clip information file. The sub-playitem also includes SubPlayItem_type field for designating a kind of supplemental stream file managed by the sub-playitem. For example, if the supplemental data stream is an audio stream for browsable slide show this field is set to "2". Or if the supplemental data stream is a text subtitle, the type field is set to "3". Therefore, it is apparent that various kinds of supplementary data may be expanded on as the standardization process progresses.

If the stream file managed by the sub-playitem is a subtitle ("SubPlayItem_type= 3''), then the sub-playitem may further include a Linking_Font_Info field. The Linking_Font_Info information, related to the font of the subtitle, provides a Font_File_name, if the font files of possible fonts exist individually, or with a Font_pointer field that indicates a position of a font proper to the subtitle in a font file, if there is only one font file.

FIG. 8 is a detailed block diagram of an optical recording and reproducing apparatus according to the present invention. As shown, the apparatus includes a pickup unit 11 reading out management information and data recorded in an optical disk, a servo 14 controlling the operation of the pickup unit 11, a signal processing unit 13 restoring a playback signal received from the pickup unit 1 into a wanted signal value or modulating a signal to be recorded in the optical disk, a memory 15 temporarily storing the management information such as the sound information and sound data as discussed above, and a microcomputer 16 controlling the operation of the servo 14, the signal processing unit 13 and the memory 15. The above discussed elements of the optical recording and reproducing apparatus may be called a recording and reproducing portion.

In relation to above, in the present invention, the memory 15 represents various storage means (RAM, buffer, and the like) that may exist in the optical recording and reproduction apparatus, and it is apparent that the memory 15 may be replaced with a plurality of different storage means.

An AV decoder 17 decodes output data according to the control of the control unit 12 to provide the decoded data to a user. In order to perform a function of recording a signal in the optical disk, an AV encoder 18 converts an input signal to a specifically formatted signal such as an MPEG2 transport stream according to the control of the control unit 12, and provides the converted signal to the signal processing unit 13 of the record playback system 20.

The control unit 12, which is an element for controlling operations of the apparatus such as discussed in detail above, controls the record playback system 20 (and more specifically, the elements therein). For example the control unit 12 controls the read out of the sub-playitem information that manages the subtitle in response to a user's order for reproducing a particular subtitle, and reproduces the subtitle according to the subtitle reproduction management information included in the read sub-playitem information. More specifically, the control unit 12 determines if the subtitle is reproducible by using the subtitle reproduction managing information Playable_PID_entries() or Virtual_Playable_PID_entries() stored on the memory temporarily, reads font of the subtitle if the subtitle is reproducible, and controls reproduction of the subtitle.

While the invention has been disclosed with respect to a limited number of embodiments, those skilled in the art, having the benefit of this disclosure, will appreciate numerous modifications and variations there from. For example, while described with respect to a Blu-ray ROM optical disk in several instances, the present invention is not limited to this standard of optical disk or to optical disks. It is intended that all such modifications and variations fall within the scope of the invention.

### Industrial applicability

The present invention includes a data structure for managing reproduction of data streams recorded thereon. In one embodiment, the recording medium stores a playlist that includes a streams table, a playitem and a sub-playitem. The playitem includes information for managing reproduction of a main data stream of data packets, and the sub-playitem includes information for managing reproduction of at least one supplemental data stream of data packets. The streams table provides a list of packet identifiers in the data packets of the main and supplemental data streams.

It will be apparent to those skilled in the art that various modifications and variations can be made in the present invention. Thus, it is intended that the present invention covers the modifications and variations of this invention provided they come within the scope of the appended claims.

## Claims

1. A recording medium having a data structure for managing reproduction of data streams, the medium being organized to have at least a database area and an audio/video stream area,
wherein the audio/video stream area stores a first data stream and a second data stream related to the first data stream, the second stream being a supplementary data stream, the first data stream and the second data stream including transport packets, each of the transport packets having a packet identifier; and
the database area is stores a playlist file including first navigation information managing reproduction of the first data stream and second navigation information managing reproduction of the second data stream related to the first data stream,
wherein said navigation information of the database area comprises a stream table defining a list of data streams among which a reproducing apparatus selects at least one data stream to be reproduced during presentation of the data streams managed by the first and second navigation information, the data streams including the first and second data streams, wherein the stream table includes a stream PID field indicating packet identifiers of transport packets of the data streams.

2. The recording medium of claim 1, wherein the stream table further includes attribute information for each of the data streams.

3. The recording medium of claim 1 or 2, wherein the first navigation information specifies reproducing interval of the first data stream.

4. The recording medium of any one of claims 1 to 3, wherein the second navigation information specifies reproducing interval of the second data stream.

5. The recording medium of any one of claim 1 to 4, wherein the second data stream is stored as a stream file independent from the first data stream.

6. The recording medium of any one of claims 1 to 5, wherein the first data stream is at least a video data stream and the second data stream is a subtitle data stream.

7. The recording medium of any one of claims 1 to 6, wherein the second data stream is an audio data stream for a browsable slideshow.

8. The recording medium of any one of claims 1 to 7, wherein the second data stream is an interactive graphics menu data stream.

9. The recording medium of any one of claims 1 to 8, wherein the first navigation information, the second navigation information and the stream table are included in a playlist file.

10. The recording medium of any one of claims 1 to 9, wherein the audio/video stream area further stores a third data stream related to the first data stream, and the database area further stores third navigation information managing the third data stream, the third stream being a supplementary data stream, the data streams including the third data stream.

11. A method of reproducing data streams, the method comprising: reading from a recording medium which is organized to have a database area and a audio/video data stream area,
reading a playlist file including first navigation information and second navigation information from the database area of the recording medium, the first navigation information managing reproduction of a first data stream, the second navigation information managing reproduction of a second data stream related to the first data stream, the second stream being a supplementary data stream, the first data stream and the second data stream including transport packets, each of the transport packets having a packet identifier,
wherein the method further comprises:
reading a stream table from the database area of the recording medium, the stream table defining a list of data streams among which a reproducing apparatus selects at least one data stream to be reproduced during presentation of data streams managed by the first and the second navigation information, the stream table including a stream PID field indicating packet identifiers of transport packets of the data streams; and
reproducing the first and second data streams defined in the stream table,

12. The method of claim 11, wherein the stream table further includes attribute information for each of the data streams.

13. The method of claim 11 or 12, wherein the first data stream is reproduced during reproducing interval specified by the first navigation information.

14. The method of any one of claims 11 to 13, wherein the second data stream is reproduced during reproducing interval specified by the second navigation information.

15. The method of any one of claims 11 to 14, the method further comprising:
reading third navigation information managing a third data stream related to the first data stream, the third data stream being a supplementary data stream , the third data stream included in the data streams; and
reproducing the third data stream along with the first and second data streams.

16. An apparatus for reproducing data streams, the apparatus comprising:
a pickup (11) configured to read data from a recording medium the recording medium being organized to have at least a database area and an audio/video data stream area, the database area comprising navigation information including stream tables to manage reproduction of the audio/video data streams, and
a controller (12) configured to control the pickup (11) to read first navigation information and second navigation information the first navigation information managing reproduction of a first data stream, the second navigation information managing reproduction of a second data stream related to the first data stream, the second stream being a supplementary data stream, the first data stream and the second data stream including transport packets, each of the transport packets having a packet identifier,
wherein the controller is further configured to control the pickup (11) to read a stream table defining a list of data streams among which the controller (12) selects at least one data stream to be reproduced during presentation of the data streams managed by the first and the second navigation information, the stream table including a stream PID field indicating packet identifiers of transport packets of the data streams, the controller (12) selects the first and second data streams among the data streams and controls the first and second data streams to be reproduced.

17. The apparatus of claim 16, wherein the controller (12) selects the first and second data streams by using packet identifiers for the first and the second data streams.

18. The apparatus of claim 17, wherein the stream table further includes attribute information for each of the data streams.

19. A method of recording a data structure for managing reproduction of audio/video data streams on a recording medium, the method comprising:
recording first navigation information and second navigation information, the first navigation information managing reproduction of a first data stream, and the second navigation information managing reproduction of a second data stream, the second stream being a supplementary data stream, the first data stream and the second data stream including transport packets, each of the transport packets having a packet identifier,
wherein the method further comprises:
recording a stream table defining a list of data streams among which a reproducing apparatus selects at least one data stream to be reproduced during presentation of the data streams managed by the first and second navigation information, the data streams including the first and second data streams, the stream table including a stream PID field indicating packet identifiers of transport packets of the data streams; and
recording the first and second navigation information and the stream
table on a recording medium, the recording medium is organized to have at least a database area and an audio/video data stream area, the database area comprises the navigation information, including the stream table.

20. The method of claim 19, further comprising:
recording a stream file including the second data stream on the recording medium, the stream file independent from the first data stream.

21. An apparatus for recording a data structure for managing reproduction of data streams on a recording medium, the apparatus comprising:
a pickup (11) configured to record data on the recording medium the recording medium is organized to have at least a database area and an audio/video data stream area, the database area comprises navigation information including stream tables to manage reproduction of the audio/video data streams; and
a controller (12) configured to configured to control the pickup (11) to record first navigation information and second navigation information, the first navigation information managing reproduction of a first data stream, and the second navigation information managing reproduction of a second data stream related to the first data stream, the second stream being a supplementary data stream, the first data stream and the second data stream including transport packets, each of the transport packets having a packet identifier,
wherein the controller (12) is further configured to control the pickup (11) to record a stream table defining a list of data streams among which a reproducing apparatus selects at least one data stream to be reproduced during presentation of the data streams managed by the first and second navigation information, the stream table including a stream PID field indicating packet identifiers of transport packets of the data streams, the data streams including the first and second data streams and the controller (12) controls the pickup (11) to record the first and second navigation information and the stream table on the recording medium.

22. The recording medium of any one of claims. 1 to 10, wherein the stream table further includes a field indicating the number of the data streams.

23. The method of any one of claims 11 to 15, 19 and 20, wherein the stream table further includes a field indicating the number of the data streams.

24. The apparatus of claims 16 to 18 and 21, wherein the stream table further includes a field indicating the number of the data streams.

## Patentansprüche

1. Aufzeichnungsmedium mit einer Datenstruktur zur Verwaltung der Wiedergabe von Datenströmen, wobei das Medium derart ausgestaltet ist, dass es mindestens einen Datenbankbereich und einen Audio-/Videostrombereich aufweist;
wobei im Audio-/Videostrombereich ein erster Datenstrom und ein mit dem ersten Datenstrom in Beziehung stehender zweiter Datenstrom gespeichert sind, wobei der zweite Strom ein Zusatzdatenstrom ist und der erste Datenstrom und der zweite Datenstrom Transportpakete enthalten, wobei jedes der Transportpakete eine Paketidentifizierung aufweist; und
wobei im Datenbankbereich eine Wiedergabelistendatei gespeichert ist, die eine erste Navigationsinformation, die die Wiedergabe des ersten Datenstroms verwaltet, und eine zweite Navigationsinformation aufweist, die die Wiedergabe des mit dem ersten Datenstrom in Beziehung stehenden zweiten Datenstroms verwaltet;
wobei die Navigationsinformation des Datenbankbereichs eine Stromtabelle aufweist, die eine Liste von Datenströmen definiert, unter denen ein Wiedergabegerät mindestens einen Datenstrom auswählt, der während der Darstellung der durch die erste und die zweite Navigationsinformation verwalteten Datenströme wiedergegeben werden soll, wobei die Datenströme den ersten und den zweiten Datenstrom aufweisen, und wobei die Stromtabelle ein Strom-PID-Feld aufweist, das Paketidentifizierungen von Transportpaketen der Datenströme anzeigt.

2. Aufzeichnungsmedium nach Anspruch 1, wobei die Stromtabelle ferner Attributinformation für jeden der Datenströme aufweist.

3. Aufzeichnungsmedium nach Anspruch 1 oder 2, wobei die erste Navigationsinformation ein Wiedergabeintervall des ersten Datenstroms spezifiziert.

4. Aufzeichnungsmedium nach einem der Ansprüche 1 bis 3, wobei die zweite Navigationsinformation ein Wiedergabeintervall des zweiten Datenstroms spezifiziert.

5. Aufzeichnungsmedium nach einem der Ansprüche 1 bis 4, wobei der zweite Datenstrom als eine vom ersten Datenstrom unabhängige Stromdatei gespeichert ist.

6. Aufzeichnungsmedium nach einem der Ansprüche 1 bis 5, wobei der erste Datenstrom mindestens ein Videodatenstrom und der zweite Datenstrom ein Untertiteldatenstrom ist.

7. Aufzeichnungsmedium nach einem der Ansprüche 1 bis 6, wobei der zweite Datenstrom ein Audiodatenstrom für eine durchblätterbare Diaschau ist.

8. Aufzeichnungsmedium nach einem der Ansprüche 1 bis 7, wobei der zweite Datenstrom ein Datenstrom für ein interaktives Grafikmenü ist.

9. Aufzeichnungsmedium nach einem der Ansprüche 1 bis 8, wobei die erste Navigationsinformation, die zweite Navigationsinformation und die Stromtabelle in einer Wiedergabelistendatei enthalten sind.

10. Aufzeichnungsmedium nach einem der Ansprüche 1 bis 9, wobei der Audio-/Videostrombereich ferner einen mit dem ersten Datenstrom in Beziehung stehenden dritten Datenstrom speichert, und wobei der Datenbankbereich ferner eine dritte Navigationsinformation zum Verwalten des dritten Datenstroms speichert, wobei der dritte Strom ein Zusatzdatenstrom ist, und wobei die Datenströme den dritten Datenstrom aufweisen.

11. Verfahren zum Wiedergeben von Datenströmen, mit den Schritten:
Lesen von Daten von einem Aufzeichnungsmedium, das derart ausgestaltet ist, dass es einen Datenbankbereich und einen Audio-/Videodatenstrombereich aufweist;
Lesen einer Wiedergabelistendatei, die eine erste Navigationsinformation und eine zweite Navigationsinformation enthält, vom Datenbankbereich des Aufzeichnungsmediums, wobei die erste Navigationsinformation die Wiedergabe eines ersten Datenstroms verwaltet und die zweite Navigationsinformation die Wiedergabe eines mit dem ersten Datenstrom in Beziehung stehenden zweiten Datenstroms verwaltet, wobei der zweite Strom ein Zusatzdatenstrom ist und der erste Datenstrom und der zweite Datenstrom Transportpakete enthalten, wobei jedes der Transportpakete eine Paketidentifizierung aufweist;
wobei das Verfahren ferner die Schritte aufweist:
Lesen einer Stromtabelle vom Datenbankbereich des Aufzeichnungsmediums, wobei die Stromtabelle eine Liste von Datenströmen definiert, unter denen ein Wiedergabegerät mindestens einen Datenstrom auswählt, der während einer Darstellung der durch die erste und die zweite Navigationsinformation verwalteten Datenströme wiedergegeben werden soll, wobei die Stromtabelle ein Strom-PID-Feld aufweist, das Paketidentifizierungen von Transportpaketen der Datenströme anzeigt; und
Wiedergeben des ersten und des zweiten Datenstroms, die in der Stromtabelle definiert sind.

12. Verfahren nach Anspruch 11, wobei die Stromtabelle ferner Attributinformation für jeden der Datenströme aufweist.

13. Verfahren nach Anspruch 11 oder 12, wobei der erste Datenstrom während eines durch die erste Navigationsinformation definierten Wiedergabeintervalls wiedergegeben wird.

14. Verfahren nach einem der Ansprüche 11 bis 13, wobei der zweite Datenstrom während eines durch die zweite Navigationsinformation definierten Wiedergabeintervalls wiedergegeben wird.

15. Verfahren nach einem der Ansprüche 11 bis 14, wobei das Verfahren ferner die Schritte aufweist:
Lesen einer dritten Navigationsinformation, die einen mit dem ersten Datenstrom in Beziehung stehenden dritten Datenstrom verwaltet, wobei der dritte Strom ein Zusatzdatenstrom ist, und wobei der dritte Datenstrom in den Datenströmen enthalten ist; und
Wiedergeben des dritten Datenstroms zusammen mit dem ersten und dem zweiten Datenstrom.

16. Vorrichtung zum Verwalten von Datenströmen, mit:
einem Abtaster (11), der dafür konfiguriert ist, Daten von einem Aufzeichnungsmedium zu lesen, wobei das Aufzeichnungsmedium derart ausgestaltet ist, dass es mindestens einen Datenbankbereich und einen Audio-/Videodatenstrombereich aufweist, wobei der Datenbankbereich Navigationsinformation enthält, die Stromtabellen zum Verwalten der Wiedergabe der Audio-/Videodatenströme aufweist; und
einem Controller (12), der dafür konfiguriert ist, den Abtaster (11) zu steuern, um eine erste Navigationsinformation und eine zweite Navigationsinformation zu lesen, wobei die erste Navigationsinformation die Wiedergabe eines ersten Datenstroms verwaltet und die zweite Navigationsinformation die Wiedergabe eines mit dem ersten Datenstrom in Beziehung stehenden zweiten Datenstroms verwaltet, wobei der zweite Datenstrom ein Zusatzdatenstrom ist und der erste Datenstrom und der zweite Datenstrom Transportpakete enthalten, wobei jedes der Transportpakete eine Paketidentifizierung aufweist,
wobei der Controller ferner dafür konfiguriert ist, den Abtaster (11) zu steuern, um die Stromtabelle zu lesen, die eine Liste von Datenströmen definiert, unter denen der Controller (12) mindestens einen Datenstrom auswählt, der während der Darstellung der durch die erste und die zweite Navigationsinformation verwalteten Datenströme wiedergegeben werden soll, wobei die Stromtabelle ein Strom-PID-Feld enthält, das Paketidentifizierungen von Transportpaketen der Datenströme anzeigt, und wobei der Controller (12) den ersten und den zweiten Datenstrom unter den Datenströmen auswählt und den ersten und den zweiten Datenstrom für eine Wiedergabe steuert.

17. Vorrichtung nach Anspruch 16, wobei der Controller (12) den ersten und den zweiten Datenstrom unter Verwendung von Paketidentifizierungen für den ersten und den zweiten Datenstrom auswählt.

18. Vorrichtung nach Anspruch 17, wobei die Stromtabelle ferner Attributinformation für jeden der Datenströme aufweist.

19. Verfahren zum Aufzeichnen einer Datenstruktur zum Verwalten der Wiedergabe von Audio-/Videodatenströmen auf einem Aufzeichnungsmedium, wobei das Verfahren die Schritte aufweist:
Aufzeichnen einer ersten Navigationsinformation und einer zweiten Navigationsinformation, wobei die erste Navigationsinformation die Wiedergabe eines ersten Datenstroms verwaltet und die zweite Navigationsinformation die Wiedergabe eines zweiten Datenstroms verwaltet, wobei der zweite Datenstrom ein Zusatzdatenstrom ist, der erste Datenstrom und der zweite Datenstrom Transportpakete aufweisen, und wobei jedes der Transportpakete eine Paketidentifizierung aufweist,
wobei das Verfahren ferner die Schritte aufweist:
Aufzeichnen einer Stromtabelle, die eine Liste von Datenströmen definiert, unter denen ein Wiedergabegerät mindestens einen Datenstrom auswählt, der während der Darstellung der durch die erste und die zweite Navigationsinformation verwalteten Datenströme wiedergegeben werden soll, wobei die Datenströme den ersten und den zweiten Datenstrom aufweisen, und wobei die Stromtabelle ein Strom-PID-Feld enthält, das Paketidentifizierungen von Transportpaketen der Datenströme anzeigt, und
Aufzeichnen der ersten und der zweiten Navigationsinformation und der Stromtabelle auf einem Aufzeichnungsmedium, wobei das Aufzeichnungsmedium derart ausgestaltet ist, dass es mindestens einen Datenbankbereich und einen Audio-/Videodatenstrombereich aufweist, wobei der Datenbankbereich die Navigationsinformation aufweist, die die Stromtabelle enthält.

20. Verfahren nach Anspruch 19, ferner mit dem Schritt:
Aufzeichnen einer Stromdatei, die den zweiten Datenstrom enthält, auf dem Aufzeichnungsmedium, wobei die Stromdatei vom ersten Datenstrom unabhängig ist.

21. Vorrichtung zum Aufzeichnen einer Datenstruktur zum Verwalten der Wiedergabe von Datenströmen auf einem Aufzeichnungsmedium, wobei die Vorrichtung aufweist:
einen Abtaster (11), der dafür konfiguriert ist, Daten auf einem Aufzeichnungsmedium aufzuzeichnen, wobei das Aufzeichnungsmedium derart ausgestaltet ist, dass es mindestens einen Datenbankbereich und einen Audio-/Videodatenstrombereich aufweist, wobei der Datenbankbereich Navigationsinformation enthält, die Stromtabellen zum Verwalten der Wiedergabe der Audio-/Videodatenströme aufweist; und
einen Controller (12), der dafür konfiguriert ist, den Abtaster (11) zu steuern, um eine erste Navigationsinformation und eine zweite Navigationsinformation aufzuzeichnen, wobei die erste Navigationsinformation die Wiedergabe eines ersten Datenstroms verwaltet und die zweite Navigationsinformation die Wiedergabe eines mit dem ersten Datenstrom in Beziehung stehenden zweiten Datenstroms verwaltet, wobei der zweite Datenstrom ein Zusatzdatenstrom ist, und wobei der erste Datenstrom und der zweite Datenstrom Transportpakete enthalten, wobei jedes der Transportpakete eine Paketidentifizierung aufweist,
wobei der Controller (12) ferner dafür konfiguriert ist, den Abtaster (11) zu steuern, um eine Stromtabelle aufzuzeichnen, die eine Liste von Datenströmen definiert, unter denen ein Wiedergabegerät mindestens einen Datenstrom auswählt, der während der Darstellung der durch die erste und die zweite Navigationsinformation verwalteten Datenströme wiedergegeben werden soll, wobei die Stromtabelle ein Strom-PID-Feld enthält, das Paketidentifizierungen von Transportpaketen der Datenströme anzeigt, die Datenströme den ersten und den zweiten Datenstrom enthalten, und wobei der Controller (12) den Abtaster (11) steuert, um die erste und die zweite Navigationsinformation und die Stromtabelle auf dem Aufzeichnungsmedium aufzuzeichnen.

22. Aufzeichnungsmedium nach einem der Ansprüche 1 bis 10, wobei die Stromtabelle ferner ein die Anzahl der Datenströme anzeigendes Feld aufweist.

23. Verfahren nach einem der Ansprüche 11 bis 15, 19 und 20, wobei die Stromtabelle ferner ein die Anzahl der Datenströme anzeigendes Feld aufweist.

24. Vorrichtung nach einem der Ansprüche 16 bis 18 und 21, wobei die Stromtabelle ferner ein die Anzahl der Datenströme anzeigendes Feld aufweist.

## Revendications

1. Support d'enregistrement ayant une structure de données pour gérer une reproduction de flux de données, le support étant organisé pour avoir au moins une aire de base de données et une aire de flux audio/vidéo,
dans lequel l'aire de flux audio/vidéo stocke un premier flux de données et un deuxième flux de données relatif au premier flux de données, le deuxième flux étant un flux de données supplémentaire, le premier flux de données et le deuxième flux de données comprenant des paquets de transport, chacun des paquets de transport ayant un identificateur de paquet ; et
l'aire de la base de données stocke un fichier de liste de reproduction comprenant des premières informations de navigation gérant la reproduction du premier flux de données et des deuxièmes informations de navigation gérant la reproduction du deuxième flux de données relatif au premier flux de données,
dans lequel lesdites informations de navigation de l'aire de base de données comprennent une table de flux définissant une liste de flux de données parmi lesquels un appareil de reproduction sélectionne au moins un flux de données à reproduire durant une présentation des flux de données gérés par les premières et deuxièmes informations de navigation, les flux de données comprenant les premier et deuxième flux de données, dans lequel la table de flux comprend un champ PID de flux indiquant des identificateurs de paquet de paquets de transport des flux de données.

2. Support d'enregistrement selon la revendication 1, dans lequel la table de flux comprend en outre des informations d'attribut pour chacun des flux de données.

3. Support d'enregistrement selon la revendication 1 ou 2, dans lequel les premières informations de navigation spécifient un intervalle de reproduction du premier flux de données.

4. Support d'enregistrement selon l'une quelconque des revendications 1 à 3, dans lequel les deuxièmes informations de navigation spécifient un intervalle de reproduction du deuxième flux de données.

5. Support d'enregistrement selon l'une quelconque des revendications 1 à 4, dans lequel le deuxième flux de données est stocké comme un fichier de flux indépendant du premier flux de données.

6. Support d'enregistrement selon l'une quelconque des revendications 1 à 5, dans lequel le premier flux de données est au moins un flux de données vidéo et le deuxième flux de données est un flux de données de sous-titrage.

7. Support d'enregistrement selon l'une quelconque des revendications 1 à 6, dans lequel le deuxième flux de données est un flux de données audio pour un diaporama navigable.

8. Support d'enregistrement selon l'une quelconque des revendications 1 à 7, dans lequel le deuxième flux de données est un flux de données de menus graphiques interactifs.

9. Support d'enregistrement selon l'une quelconque des revendications 1 à 8, dans lequel les premières informations de navigation, les deuxièmes informations de navigation et la table de flux sont incluses dans un fichier de liste de reproduction.

10. Support d'enregistrement selon l'une quelconque des revendications 1 à 9, dans lequel l'aire de flux audio/vidéo stocke en outre un troisième flux de données relatif au premier flux de données, et l'aire de base de données stocke en outre des troisièmes informations de navigation gérant le troisième flux de données, le troisième flux étant un flux de données supplémentaire, les flux de données incluant le troisième flux de données.

11. Procédé pour reproduire des flux de données, le procédé comprenant :
la lecture à partir d'un support d'enregistrement qui est organisé pour avoir une aire de base de données et une aire de flux de données audio/vidéo,
la lecture d'un fichier de liste de reproduction comprenant des premières informations de navigation et des deuxièmes informations de navigation à partir de l'aire de base de données du support d'enregistrement, les premières informations de navigation gérant une reproduction d'un premier flux de données, les deuxièmes informations de navigation gérant une reproduction d'un deuxième flux de données relatif au premier flux de données, le deuxième flux étant un flux de données supplémentaire, le premier flux de données et le deuxième flux de données comprenant des paquets de transport, chacun des paquets de transport ayant un identificateur de paquet,
dans lequel le procédé comprend en outre :
la lecture d'une table de flux à partir de l'aire de base de données du support d'enregistrement, la table de flux définissant une liste de flux de données parmi lesquels un appareil de reproduction sélectionne au moins un flux de données à reproduire durant une présentation de flux de données gérés par les premières et
deuxièmes informations de navigation, la table de flux comprenant un champ PID de flux indiquant des identificateurs de paquet de paquets de transport des flux de données ; et
la reproduction des premier et deuxième flux de données définis dans la table de flux.

12. Procédé selon la revendication 11, dans lequel la table de flux comprend en outre des informations d'attribut pour chacun des flux de données.

13. Procédé selon la revendication 11 ou 12, dans lequel le premier flux de données est reproduit durant un intervalle de reproduction spécifié par les premières informations de navigation.

14. Procédé selon l'une quelconque des revendications 11 à 13, dans lequel le deuxième flux de données est reproduit durant un intervalle de reproduction spécifié par les deuxièmes informations de navigation.

15. Procédé selon l'une quelconque des revendications 11 à 14, le procédé comprenant en outre :
la lecture de troisièmes informations de navigation gérant un troisième flux de données relatif au premier flux de données, le troisième flux de données étant un flux de données supplémentaire, le troisième flux de données étant inclus dans les flux de données ; et
la reproduction du troisième flux de données avec les premier et deuxième flux de données.

16. Appareil pour reproduire des flux de données, l'appareil comprenant :
un lecteur (11) configuré pour lire des données à partir d'un support d'enregistrement, le support d'enregistrement étant organisé pour avoir au moins une aire de base de données et une aire de flux de données audio/vidéo, l'aire de base de données comprenant des informations de navigation incluant des tables de flux pour gérer une reproduction des flux de données audio/vidéo ; et
un contrôleur (12) configuré pour commander le lecteur (11) pour lire des premières informations de navigation et des deuxièmes informations de navigation, les premières informations de navigation gérant une reproduction d'un premier flux de données, les deuxièmes informations de navigation gérant une reproduction d'un deuxième flux de données relatif au premier flux de données, le deuxième flux de données étant un flux de données supplémentaire, le premier flux de données et le deuxième flux de données comprenant des paquets de transport, chacun des paquets de transport ayant un identificateur de paquet,
dans lequel le contrôleur est configuré en outre pour commander le lecteur (11) pour lire une table de flux définissant une liste de flux de données parmi lesquels le contrôleur (12) sélectionne au moins un flux de données à reproduire durant une présentation des flux de données gérés par les premières et les deuxièmes informations de navigation, la table de flux comprenant un champ PID de flux indiquant des identificateurs de paquet de paquets de transport des flux de données, le contrôleur (12) sélectionne les premier et deuxième flux de données parmi les flux de données et commande les premier et deuxième flux de données à reproduire.

17. Dispositif selon la revendication 16, dans lequel le contrôleur (12) sélectionne les premier et deuxième flux de données en utilisant des identificateurs de paquet pour les premier et deuxième flux de données.

18. Dispositif selon la revendication 17, dans lequel la table de flux comprend en outre des informations d'attribut pour chacun des flux de données.

19. Procédé d'enregistrement d'une structure de données pour gérer une reproduction de flux de données audio/vidéo sur un support d'enregistrement, le procédé comprenant :
l'enregistrement de premières informations de navigation et de deuxièmes informations de navigation, les premières informations de navigation gérant une reproduction d'un premier flux de données et les deuxièmes informations de navigation gérant la reproduction d'un deuxième flux de données, le deuxième flux de données étant un flux de données supplémentaire, le premier flux de données et le deuxième flux de données comprenant des paquets de transport, chacun des paquets de transport ayant un identificateur de paquet,
dans lequel le procédé comprend en outre :
l'enregistrement d'une table de flux définissant une liste de flux de données parmi lesquels un appareil de reproduction sélectionne au moins un flux de données à reproduire durant une présentation des flux de données gérés par les premières et deuxièmes informations de navigation, les flux de données incluant les premier et deuxième flux de données, la table de flux comprenant un champ PID de flux indiquant des identificateurs de paquet de paquets de transport des flux de données ;
et
l'enregistrement des premières et deuxièmes informations de navigation et de la table de flux sur un support d'enregistrement, le support d'enregistrement est organisé pour avoir au moins une aire de base de données et une aire de flux de données audio/vidéo, l'aire de base de données comprend les informations de navigation, incluant la table de flux.

20. Procédé selon la revendication 19, comprenant en outre :
l'enregistrement d'un fichier de flux comprenant le deuxième flux de données sur le support d'enregistrement, le fichier de flux étant indépendant du premier flux de données.

21. Appareil pour enregistrer une structure de données pour gérer une reproduction de flux de données sur un support d'enregistrement, l'appareil comprenant :
un lecteur (11) configuré pour enregistrer des données sur le support d'enregistrement, le support d'enregistrement est organisé pour avoir au moins une aire de base de données et une aire de flux de données audio/vidéo, l'aire de base de données comprend des informations de navigation incluant des tables de flux pour gérer une reproduction des flux de données audio/vidéo ; et
un contrôleur (12) configuré pour commander le lecteur (11) pour enregistrer des premières informations de navigation et des deuxièmes informations de navigation, les premières informations de navigation gérant une reproduction d'un premier flux de données et les deuxièmes informations de navigation gérant une reproduction d'un deuxième flux de données relatif au premier flux de données, le deuxième flux de données étant un flux de données supplémentaire, le premier flux de données et le deuxième flux de données comprenant des paquets de transport, chacun des paquets de transport ayant un identificateur de paquet,
dans lequel le contrôleur (12) est configuré en outre pour commander le lecteur (11) pour enregistrer une table de flux définissant une liste de flux de données parmi lesquels un appareil de reproduction sélectionne au moins un flux de données à reproduire durant une présentation des flux de données gérés par les premières et deuxièmes informations de navigation, la table de flux comprenant un champ PID de flux indiquant des identificateurs de paquet de paquets de transport des flux de données, les flux de données incluant les premier et deuxième flux de données, et le contrôleur (12) commande le lecteur (11) pour enregistrer les premières et deuxièmes informations de navigation et la table de flux sur le support d'enregistrement.

22. Support d'enregistrement selon l'une quelconque des revendications 1 à 10, dans lequel la table de flux comprend en outre un champ indiquant le nombre des flux de données.

23. Procédé selon l'une quelconque des revendications 11 à 15, 19 et 20, dans lequel la table de flux comprend en outre un champ indiquant le nombre des flux de données.

24. Appareil selon les revendications 16 à 18 et 21, dans lequel la table de flux comprend en outre un champ indiquant le nombre des flux de données.
